# EUROPEAN PATENT APPLICATION

(11) **EP 2 178 308 A2**
(43) Date of publication of application: **21.04.2010**
(21) Application number: 09012935.4
(22) Date of filing: 13.10.2009
(51) Int. Cl.: H04R 3/00

(54) **Audio signal processing device and audio signal processing method**

(30) Priority: 15.10.2008 JP 2008266618
(71) Applicant: Yamaha Corporation, Hamamatsu-shi, Shizuoka-ken (JP)
(72) Inventor: Fukuyama, Tatsuya, Hamamatsu-shi Shizuoka-ken (JP)
(74) Representative: Wagner, Karl H.

(57) **Abstract**

An audio signal processing device includes an audio signal acquiring section which acquires an audio signal, an identifying section which determines whether a format of the audio signal is a first format or a second format, and identifies the format of the audio signal and a switching timing of switching between the first format and the second format of the audio signal, a first sound processing section which applies a first sound processing adapted to the first format to the audio signal input from the audio acquiring section to output a first processed audio signal, a second sound processing section which applies a second sound processing adapted to the second format to the audio signal input from the audio acquiring section to output a second processed audio signal, a switching section which switches among the first processed audio signal and the second processed audio signal to output either one of the first and second processed audio signals on the basis of a switching signal, and a switching control section which outputs the switching signal to the switching section so that the switching section switches one of the first and second processed audio signals to the other of the first and second processed audio signals which corresponds to the format of the audio signal identified by the identifying section after a standby time is elapsed from the switching timing.

## Description

### BACKGROUND

The present invention relates to a technique for switching sound processes without a sense of incongruity during viewing of a digital broadcast.

In recent years, various content can be enjoyed with high sound quality by connecting an AV amplifier to a display device such as a television and emitting sounds from an external speaker. Such AV amplifier provides sound effects by various sound processings. A viewer can change settings to his/her favorite sound effect according to content which the viewer views. However, when switching the sound effect, voices are muted for preventing noises of setting and switching in a DSP (Digital Signal Processor) which performs sound processing, and this causes the viewer to feel a sense of incongruity. For reducing such a sense of incongruity, various techniques have been proposed (for example, JP-A-2008-78879).

The number of channels constituting an audio signal of a voice part variously changes in accordance with contents in a digital broadcast, etc. For example, in a movie, the number of channels is, for example, 5.1 channels, and the number of channels changes to 2 channels in a commercial interposed in a movie. This way, the number of channels changes with time. On the other hand, sound processing which provides an optimum sound effect differs depending on the number of channels, so that, for example, unless a viewer provides an instruction to switch the sound effect when a movie is changed to a commercial, the sound processing for 5.1 channels is applied to a 2-channel audio signal, and a sense of incongruity remains in the sound effect during viewing of the commercial.

When a viewer provides an instruction to switch the sound effect, the sound processing is switched. However, the sound effect is not switched immediately even by using the technique disclosed in JP-A-2008-78879, so that the sense of incongruity remains.

### SUMMARY

The present invention has been made in view of the above-described circumstances, and an object of the present invention is to provide an audio signal processing device and an audio signal processing method which can perform switching into sound processing for applying an optimum sound effect, even when a format of an audio signal changes, in accordance with the change of the format of the audio signal, and reduces a sense of incongruity in the switching of the sound processing.

In order to achieve the above object, according to the present invention, there is provided an audio signal processing device comprising:
an audio signal acquiring section which acquires an audio signal;
an identifying section which determines whether a format of the audio signal is a first format or a second format, and identifies the format of the audio signal and a switching timing of switching between the first format and the second format of the audio signal;
a first sound processing section which applies a first sound processing adapted to the first format to the audio signal input from the audio acquiring section to output a first processed audio signal;
a second sound processing section which applies a second sound processing adapted to the second format to the audio signal input from the audio acquiring section to output a second processed audio signal;
a switching section which switches among the first processed audio signal and the second processed audio signal to output either one of the first and second processed audio signals on the basis of a switching signal; and
a switching control section which outputs the switching signal to the switching section so that the switching section switches one of the first and second processed audio signals to the other of the first and second processed audio signals which corresponds to the format of the audio signal identified by the identifying section after a standby time is elapsed from the switching timing.

Preferably, a first processing time from an input of the audio signal to an output of the first processed audio signal in the first sound processing section and a second processing time from an input of the audio signal to an output of the second processed audio signal in the second sound processing section are set in accordance with the standby time.

Preferably, the audio signal processing device further includes a time information acquiring section which acquires video processing time information from a display device, the video processing time information indicating a processing time required for displaying an acquired video signal on a display screen of the display device by processing the video signal. The standby time is set in accordance with the processing time indicated by the video processing time information.

Here, it is preferable that the audio signal acquiring section acquires the audio signal from the display device.

According to the present invention, there is also provided an audio signal processing method, comprising:
acquires an audio signal;
determining whether a format of the audio signal is a first format or a second format, and identifying the format of the audio signal and a switching timing of switching between the first format and the second format of the audio signal;
applying a first sound processing adapted to the first format to the audio signal acquired by the acquiring process to output a first processed audio signal;
applying a second sound processing adapted to the second format to the audio signal acquired by the acquiring process to output a second processed audio signal;
switching among the first processed audio signal and the second processed audio signal to output either one of the first and second processed audio signals on the basis of a switching signal; and
outputting the switching signal to the switching section so that one of the first and second processed audio signals is switched to the other of the first and second processed audio signals which corresponds to the format of the audio signal identified by the identifying process after a standby time is elapsed from the switching timing.

Preferably, a first processing time from an input of the audio signal to an output of the first processed audio signal in the applying process of the first sound processing and a second processing time from an input of the audio signal to an output of the second processed audio signal in the applying process of the second sound processing are set in accordance with the standby time.

Preferably, the audio signal processing method, further includes a time information acquiring section which acquires video processing time information from a display device, the video processing time information indicating a processing time required for displaying an acquired video signal on a display screen of the display device by processing the video signal. The standby time is set in accordance with the processing time indicated by the video processing time information.

Here, it is preferable that, the audio signal is acquired from the display device in the acquiring process.

According to the present invention, the audio signal processing device and the audio signal processing method can perform a switching into a sound processing for applying an optimum sound effect to an audio signal, even when a format of the audio signal is changed, in accordance with the change of the format of the audio signal, and reduces a sense of incongruity in the switching process.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a block diagram showing a configuration of an AV system of an embodiment;
Fig. 2 is an explanatory view showing a relationship among processing times of the embodiment;
Figs. 3A and 3B are flowcharts showing operations of a controller of the embodiment;
Fig. 4 is a block diagram showing a configuration of an AV system of a variation 1 of the embodiment; and
Fig. 5 is an explanatory view showing a relationship among processing times of the variation 1 of the embodiment.

### DETAILED DESCRIPTION OF EXEMPLARY EMBODIMENTS

Hereinafter, an embodiment of the present invention will be described.

### <Embodiment>

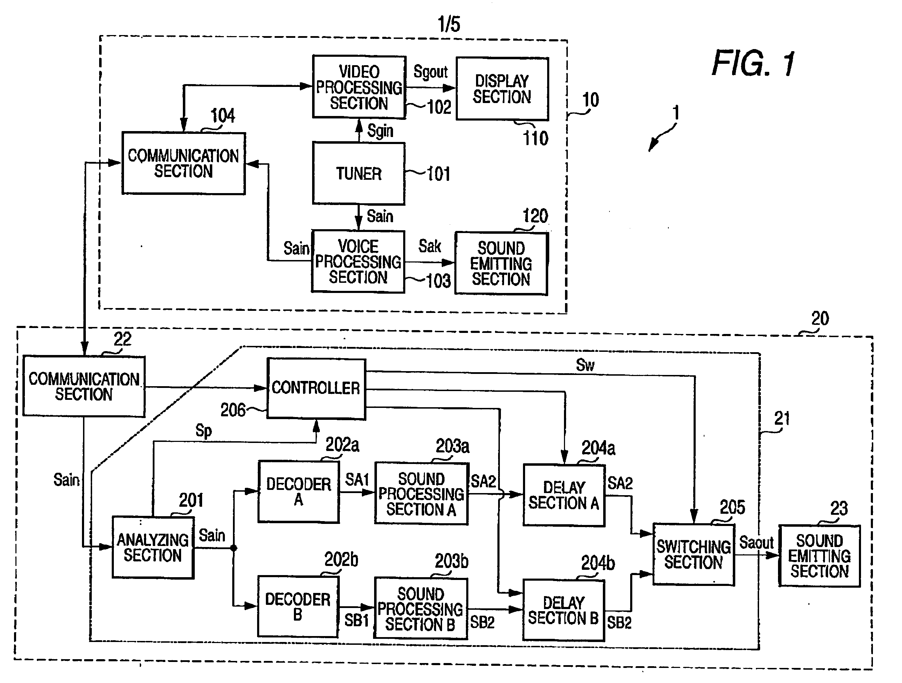

Fig. 1 is a block diagram showing a configuration of an AV system 1 of an embodiment of the present invention. As shown in Fig. 1, the AV system 1 includes a television device 10 and an AV amplifier 20. The television device 10 and the AV amplifier 20 are connected by a communication cable such as an HDMI (registered trademark) cable. Hereinafter, configurations of the television device 10 and the AV amplifier 20 will be described.

The television device 10 includes a tuner 101, a video processing section 102, a voice processing section 103, a communication section 104, a display section 110, and a sound emitting section 120. The tuner 101 acquires a received signal from an antenna which receives airwaves including a video signal and an audio signal, and outputs a video signal Sgin and an audio signal Sain according to a broadcast station selected by an operation on an operation section (not shown), etc. The audio signal Sain is in a format of m channels or n channels (m≠n), and is changed into another channels according to content. In this example, the audio signal Sain is in a 2-channel stereo or 5.1-channel surround-sound format.

The video processing section 102 acquires a video signal Sgin output from the tuner 101, and outputs a display signal Sgout obtained by applying a decoding processing and a video output processing to the video signal Sgin. A total processing time necessary for these decoding processing and video output processing is T1, and hereinafter, referred to as a video processing time T1. The video processing section 102 outputs video processing time information indicating the video processing time T1 to the communication section 104 in response to a request from the communication section 104 described later.

The display section 110 is a display device having a display screen, such as a liquid crystal display or an organic EL display, and receives an input of a display signal Sgout output from the video processing section 102, and displays video images corresponding to the display signal Sgout on the display screen. On the assumption that the time taken until the display signal Sgout is displayed on the display screen after the display signal Sgout is input into the display section 110 is negligibly short, the time taken until the video signal Sgin is displayed on the display screen after the video signal Sgin is acquired by the video processing section 102 corresponds to the video processing time T1.

The voice processing section 103 is, for example, a DSP(Digital Signal Processor), which acquires the audio signal Sain output from the tuner 101, and outputs an audio signal Sak obtained by applying a decoding processing, a sound processing, and a delay processing to the audio signal Sain. A total processing time taken for the decoding processing, the sound processing, and the delay processing is set so as to correspond to the video processing time T1. Here, when the voice processing section 103 changes the content of the sound processing according to an instruction of an operation on the operation section(not shown), that is, for example, when changing the type of the sound effect to be applied to a sound signal, for preventing noises of setting and switching of the sound effect, voices are muted for a predetermined period.

The voice processing section 103 outputs the audio signal Sain acquired from the tuner 101 to the communication section 104 in response to a request from the communication section 104 described later. At this time, the voice processing section 103 may stop the output of the audio signal Sak to the sound emitting section 120. Alternatively, it is also allowed that the request from the communication section 104 is sent to the tuner 101, and the tuner 101 directly outputs the audio signal Sain to the communication section 104. Depending on the request from the communication section 104, an audio signal decoded in the voice processing section 103 may be output, however, in this example, the audio signal Sain before being decoded is output.

The sound emitter 102 has a D/A converter, an amplifier, and a speaker. The sound emitting section 120 receives an input of an audio signal Sak from the voice processing section 103, and applies a digital/analog conversion and an amplification processing thereto, and then emits the processed audio signal from the speaker. On the assumption that the time from the input of the audio signal Sak into the sound emitting section 120 to an emission of the audio signal is negligibly short, the time taken until the audio signal Sain is emitted from the sound emitting section 120 after the audio signal is acquired by the voice processing section 103 corresponds to the video processing time T1. Accordingly, in the television device 10, a display based on the video signal Sgin and a sound emission based on the audio signal Sain output from the tuner 101 are prevented from lagging from each other.

The communication section 104 has a connection terminal for connecting an HDMI cable, etc., and is connected to the AV amplifier 20 through the cable and exchanges various signals. In this example, the communication section 104 requests the video processing section 102 to output video processing time information in response to a request from the AV amplifier 20, transmits the video processing time information output from the video processing section 102 to the AV amplifier 20, and transmits the audio signal Sain output from the voice processing section 103 or the tuner 101 to the AV amplifier 20. The configuration of the television device 10 is thus described.

The AV amplifier 20 includes an audio signal processing section 21, a communication section 22, and a sound emitting section 23. The communication section 22 has a communication terminal for the HDMI cable, etc., and is connected to the television device 10 through the cable, and exchanges various signals. In this example, the communication section 22 requests the television device 10 to transmit the video processing time information and transmit the audio signal Sain. Accordingly, when the communication section 22 receives the video processing time information and the audio signal Sain from the television device 10, the communication section 22 outputs these to the audio signal processing section 21.

The sound emitting section 23 includes pluralities of D/A converters, amplifiers, and speakers constituting a speaker array unit, and also includes a subwoofer to create an environment capable of reproducing 5.1-channel audio signals. The sound emitting section 23 receives inputs of audio signals Saout according to the speakers from the audio signal processing section 21, applies a digftal/analog conversion and an amplification processing to the audio signals Saout, and emits sounds from the speakers. Accordingly, a plurality of sound beams are emitted from the speaker array unit of the sound emitting section 23, and by making the beams reach a user by using reflection on the walls of a room in which the speaker array unit is installed, various sound effects can be provided to the user. In addition to sound effects provided by emitting sounds from the speaker array unit, it is also possible that a plurality of speakers are set at predetermined positions and sounds are emitted therefrom.

The audio signal processing section 21 is, for example, a DSP or the like, and applies predetermined sound processing to the audio signal Sain input from the communication section 22 and outputs it as an audio signal Saout. Hereinafter, a configuration of the audio signal processing section 21 will be described.

An analyzing section 201 acquires the audio signal Sain input into the audio signal processing section 21, analyzes the format of the audio signal Sain, and outputs the audio signal Sain after determining whether the number of channels of the audio signal Sain is 2 channels or 5.1 channels. When the analyzing section 201 determines whether the number of channels of the audio signal Sain is 2 channels or 5.1 channels, the analyzer outputs a determination signal Sp indicating the determined number of channels. A processing time taken from this analysis to the output of the determination signal Sp is T2. That is, at a timing being T2 earlier than the output of the determination signal Sp, the number of channels of the audio signal Sain input into the analyzing section 201 has been changed.

A decoder A 202a outputs an audio signal SA1 obtained by applying a decoding processing to the audio signal Sain output from the analyzing section 201. This decoding processing is adapted to the number of channels of 5,1 channels. A processing time necessary for this decoding processing is T3a. A decoder B 202b outputs an audio signal SB1 obtained by applying a decoding processing to the audio signal Sain output from the analyzing section 201. The decoding processing in the decoder B 202b is adapted to the number of channels of 2 channels. A processing time necessary for this decoding processing is T3b.

A sound processing section A 203a applies a sound processing (surround-sound processing) corresponding to a set sound effect to the audio signal SA1 output from the decoder A 202a and outputs an audio signal SA2. The audio signal SA2 subjected to the sound processing has a number of channels corresponding to the speakers of the sound emitting section 23, and sound beams are emitted from the speakers of the sound emitting section 23. The configuration of the sound processing section B 203b is the same as that of the sound processing section A 203a except that the sound processing section B 203b applies a sound processing (stereo sound processing) to the audio signal SB1 input from the decoder B 202b and outputs an audio signal SB2, therefore, the description of this configuration of the decoder B 202b is omitted. The sound effects set in the sound processing section A 203a and the sound processing section B 203b are designated in accordance with a user's operation on the operation section(not shown). Processing times necessary for the sound processings in the sound processing section A 203a and B 203b are T4a and T4b, respectively.

A delay section A 204a delays the audio signal SA2 output from the sound processing section A 203a by a time (hereinafter, referred to as a delay time T5a) set from a controller 206 and outputs the delayed audio signal SA2. A delay section B 204b delays the audio signal SB2 output from the sound processing section B 203b by a time (hereinafter, referred to as a delay time T5b) set from the controller 206, and outputs the delayed audio signal SB2.

A switching section 205 switches the audio signal SA2 output from the delay section A 204a and the audio signal SB2 output from the delay section B 204b in response to a switching signal Sw output from the controller 206 as described later to output either one of the audio signal SA2 and the audio signal SB2 as an audio signal Sout to the sound emitting section 23. In detail, when the switching signal Sw indicates 5.1 channels, the switching section 205 outputs the audio signal SA2 as the audio signal Sout, and when the switching signal Sw Indicates 2 channels, the switching section outputs the audio signal SB2 as the audio signal Sout.

When the switching section 205 switches the audio signal to be output, in order to prevent switching noises, the switching section 205 performs a muting by stopping the output of the switching section 205 for a predetermined time T6. This muting time T6 is only during the switching of the output, and can be set much shorter than a conventional muting time taken for a DSP setting and a DSP switching, If the sense of incongruity is less during viewing of the digital broadcast, it is not necessary to perform the muting by the switching section 205. Also, the switching of the audio signal may be performed by conducting a crossfading processing of the audio signal SA2 and the audio signal SB2.

The controller 206 recognizes the video processing time T1 by acquiring the video processing time information from the communication section 22. It is assumed that the controller 206 recognizes in advance the processing times T2, T3a, T3b, T4a, and T4b in the audio signal processing section 21. Then, the controller 206 sets the delay time T5a (= T1-T2-T3a-T4a) in the delay section A 204a and sets the delay time T5b (= T1-T2-T3b-T4b) in the delay section B 204b.

The controller 206 acquires the determination signal Sp output from the analyzing section 201, and after standing by until a period T1-T2 elapses, that is, at a timing at which T1 elapses from the timing at which the format of the audio signal Sain input into the analyzing section 201 is changed to another format, the controller 206 outputs the switching signal Sw to the switching section 205. This switching signal Sw shows the number of channels (5.1 channels or 2 channels) indicated by the acquired determination signal Sp. When the time until the audio signal Sain is input into the analyzing section 201 from the audio signal Sain is output from the tuner 101 is not negligibly short in comparison with the total processing time, the time may be added in advance to the time T2.

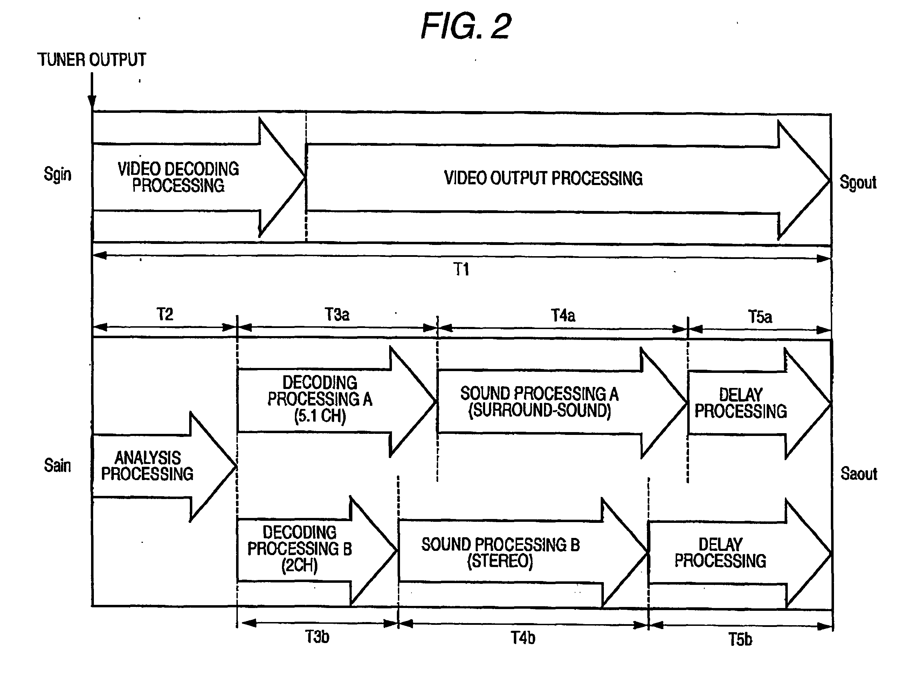

Fig. 2 is an explanatory view showing a relationship among T1, T2, T3a, T3b, T4a, T4b, T5a, and T5b until the video signal Sgin and the audio signal Sain are output as the display signal Sgout and the audio signal Saout from the video signal Sgin and the audio signal Sain are output from the tuner 101. As described above, by setting T5a and T5b and controlling the output timing of the switching signal Sw by the controller 206, T1 = T2+T3a+T4a+T5a (= T2+T3b+T4b+T5b) is satisfied. Therefore, while a synchronized state of the video signal Sgin and the audio signal Sain output from the tuner 101 is kept, the video signal Sgin can be displayed and the audio signal Sain can be emitted as sounds. Both of "T2+T3a+T4a+T5a" and "T2+T3b+T4b+T5b" become T1 respectively, and are equal to each other. However, a lag between these times which does not cause a sense of Incongruity in listening is permitted and it is sufficient that these times are substantially equal to each other. When the times T2, T3a, T3b, T4a, and T4b fluctuate in real time according to a processing content, the controller 206 may recognize the fluctuations and adjust the settings of T5a and T5b on the basis of the fluctuations.

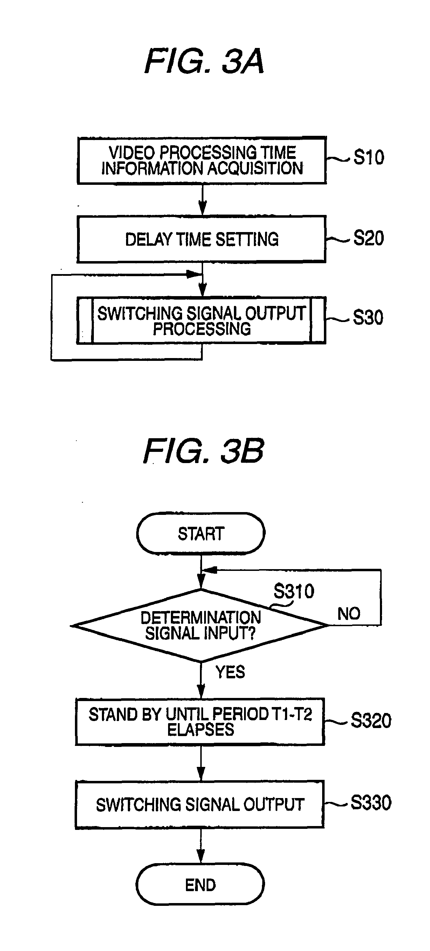

Next, operations of the AV system 1, specifically, operations of the AV amplifier 20 will be described with reference to Figs. 3A and 3B. Fig. 3A is a flowchart showing operations in the controller 206, and Fig. 3B is a flowchart showing content of switching signal output processing (Step S30) in Fig. 3A. First, when a user performs a predetermined operation (for example, an instruction for emitting sounds from the AV amplifier) on the operation section(not shown) of the AV amplifier 20, the communication section 22 requests the television device 10 to transmit the video processing time information and the audio signal Sain. In response to the request, when the video processing time information and the audio signal Sain are transmitted from the television device 10 to the AV amplifier 20, the controller 206 recognize the video processing time T1 by acquiring the video processing time information (Step S10), and sets delay times T5a and T5b in the delay section A 204a and the delay section B 204b (Step S20). Then, the controller 206 continues a switching signal output processing (Step S30) shown hereinafter.

In the switching signal output processing (S30), the controller 206 continues the determination as to whether the determination signal Sp is input from the analyzing section 201 (Step S310). After the determination signal Sp is input from the analyzing section 201 (Step S310: Yes), the controller 206 stands by until the period T1-T2 elapses (Step S320), and then the controller outputs the switching signal Sw (Step S330). It is assumed that the determination of Step S310 is also continued during Steps S320 and S330. Hereafter, a detailed example of the output switching processing will be described.

When the audio signal Sain is input to the analyzing section 201, the analyzing section 201 analyzes the format of the input audio signal, and outputs the determination signal Sp indicating the format (5.1 channels in this example) of the input audio signal. In response to the determination signal Sp, the controller 206 outputs the switching signal Sw to the switching section 205. The switching signal Sw which is output first may not be output at the above-described timing (after the period T1-T2 are elapsed from the determination signal Sp is acquired), and may be output immediately after the determination signal Sp is acquired. The switching section 205 outputs the audio signal SA2 subjected to the sound processing adapted to 5.1 channels as the audio signal Sout to the sound emitting section 23 and makes the sound emitting section 23 emit sounds.

Thereafter, when the format of the audio signal Sain changes from 5.1 channels to 2 channels, after T2 elapses from the change of the formal, the determination signal Sp is output from the analyzing section 201. Then, after the period T1-T2 elapses, the controller 206 outputs the switching signal Sw, and the switching section 205 outputs the audio signal SB2 subjected to the sound processing adapted to 2 channels as the audio signal Sout to the sound emitting section 23 and makes the sound emitting section 23 emit sounds. At this time, sounds are muted for the muting time T6. Therefore, in this example, the beginning part changed to 2 channels is muted. It is also allowed that the timing of outputting the switching signal Sw by the controller 206 is changed to a timing after the period T1-T2-T6 is elapsed from the output of the determination signal Sp so that the part immediately before being changed to 2 channels (the last part of 5.1 channels) is muted.

Thus, the AV system 1 of the embodiment of the present invention can realize synchronization between video and audio by recognizing the video processing time T1 in advance in the AV amplifier 20, and even when the format of the audio signal Sain changes, a user can listen to the sounds with a sound effect adapted to the format. The AV amplifier 20 concurrently performs sound processings which provide sound effects adapted to the respective formats, and identifies a timing at which the format of the input audio signal Sain changes, and reserves a switching of an audio signal output from the switching section 205 after elapse of T1 from the identified timing. Therefore, at a timing according to the changing (switching) of the format of the audio signal Sain, a switching of the audio signals SA2 and SB2 can be made so that audio provided with a sound effect adapted to the changed format is output. Also, the audio muting time at the time of the switching of the audio signals SA2 and SB2 can be reduced to be very short or eliminated, so that the sense of incongruity in listening can be reduced.

An embodiment of the present invention is described above, and the present invention can also be carried out in various modes as follows.

### <Variation 1>

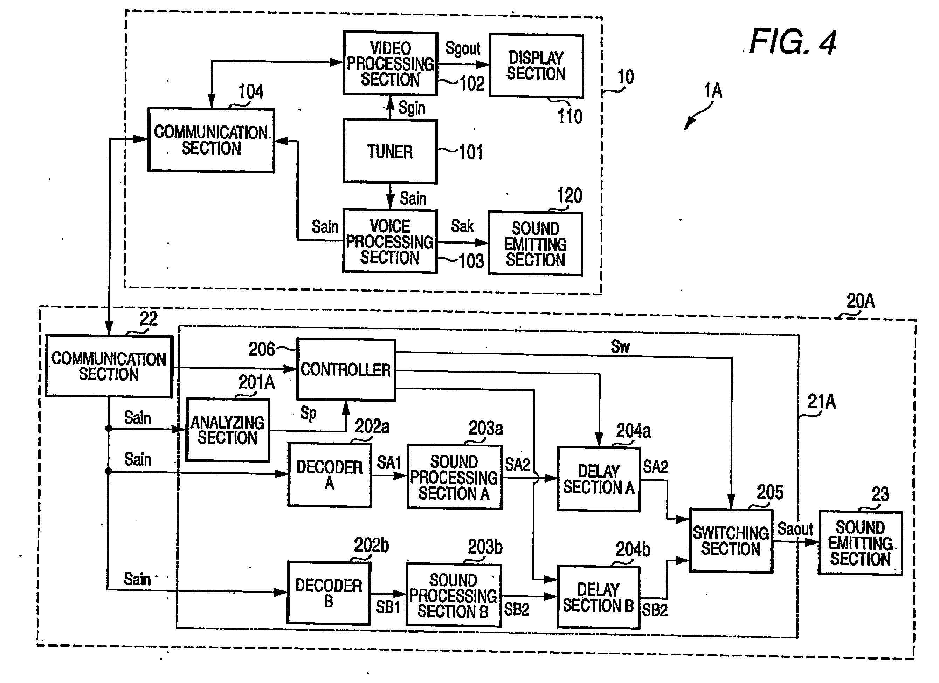

In the above-described embodiment, in the AV amplifier 20, the audio signal Sain received by the communication section 22 is input into the decoder A 202a and the decoder B 202b via the analyzing section 201, however, as shown in Fig. 4, the audio signal Sain is input into the decoder A 202a and the decoder B 202b in an AV amplifier 20A from the communication section 22 without passing through an analyzing section 201A. In this case, the audio signal Sain output from the communication section 22 is acquired in the analyzing section 201A, the decoder A 202a, and the decoder B 202b. Processings are the same as in the embodiment except that the audio signal Sain is not output from the analyzing section 201A, therefore description of the processings is omitted.

Accordingly, the AV amplifier 20A can adapt the case where a television device 10 having a video processing time T1' being shorter than the video processing time T1 in the above embodiment is connected thereto. For example, when the video processing time T1' is shorter than T2+T3a+T4a of the above embodiment, even if the delay time T5a in the delay section A 204a is set to "0," the audio emitted from the sound emitting section 23 is delayed behind the video displayed on the display section 110. Since the AV amplifier 20A in this variation performs the decoding processing and the analysis processing in parallel, the AV amplifier 20A can adapts the shorter video processing time of the television device 10.

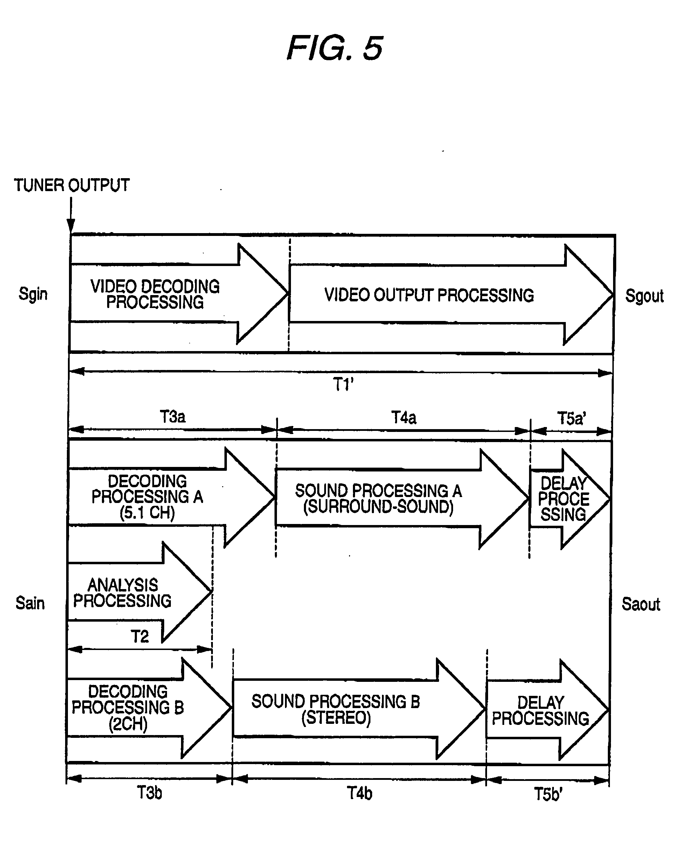

Fig. 5 is an explanatory view showing a relationship among T1', T2, T3a, T3b, T4a, T4b, T4b, T5a', and T5b' from the video signal Sgin and the audio signal Sain are output from the tuner 101 until the display signal Sgout and the audio signal Saout are output from the video processing section 102 and the switching section 205 respectively. As shown in Fig. 5, in the configuration of the present variation, the delay time T5a' set in the delay section A 204a becomes T1'-T3a+T4a, and the delay time T5b' set in the delay section B 204b becomes T1'-T3b+T4b. The controller 206 outputs the switching signal Sw after a period T1'-T2 elapses from the timing of the output of the determination signal Sp from the analyzing section 201A.

### <Variation 2>

In the above embodiment, two formats (2 channels and 5.1 channels) are used as the format of the audio signal Sain, however, more formats may also be used. In this case, the number of sets each having the decoder, the sound processing section, and the delay section in the audio signal processing section 21 is increased according to the number of the format types.

### <Variation 3>

In the above embodiment, the television device 10 and the AV amplifier 20 in the AV system 1 are separate from each other. However, the television device 10 and the AV amplifier 20 may be integrated with each other as one unit. In this case, the configuration of the voice processing section 103 in the television device 10 is integrated into the audio signal processing section 21 in the AV amplifier 20. Here, the controller 206 and the video processing section 102 are provided in the same device. Therefore, if the controller 206 .... recognizes the video processing time T1 in advance, the controller 206 does not need to acquire the video processing time information.

### <Variation 4>

In the above embodiment, when the tuner 101 is provided in a STB (Set-top box) which is mounted outside the television device 10, the television device 10 may acquire the video signal Sgin and the audio signal Sain by radio communications. Also, the AV amplifier 20 may acquire the audio signal Sain directly from the tuner 101 provided outside.

In this case, since a communication delay occurs until receiving a radio wave by the television device 10 from the STB, the controller 206 of the AV amplifier 20 treats a video processing time in which the communication delay time is added to the video processing time T1 recognized from video processing time information. This communication delay time may be set in the controller 206 by inputting the communication delay time by an operation on an operation section(not shown), or may be set in advance.

### <Variation 5>

In the above embodiment, the AV amplifier 20 performs sound processings for applying sound effects adapted to the respective formats in parallel, however, the components for the sound processing in the processing path for the audio signal SA2 or the audio signal SB2 which is not selected as the audio signal Saout to be output from the switching section 205 may be set so as to temporarily stop operations. For example, in a period in which the audio signal Sain is in the format of 5.1 channels and the audio signal SA2 is output as the audio signal Saout, the operations of the decoder B 202b, the sound processing section B 203b, and the delay section 204b as the components in the processing path for the audio signal SB2 are stopped at least during a part of the period.

An instruction for this stop of these components is issued by the controller 206 according to an output timing of the determination signal Sp or the switching signal Sw. The period of the stop may be a predetermined period after the output of the switching signal Sw, or may be a predetermined period after the output of the determination signal Sp. Alternatively, the period from the output of the switching signal Sw to the output of the determination signal Sp may be set as the period of the stop. That is, the period of the stop is set so as to prevent absence of the audio signal to be adopted as the audio signal Saout when switching the audio signal to be output in the switching section 205. Accordingly, by stopping the components in the processing path for the audio signal which is not adopted as the audio signal Saout, a power consumption saving can be realized.

Although the invention has been illustrated and described for the particular preferred embodiments, it is apparent to a person skilled in the art that various changes and modifications can be made on the basis of the teachings of the invention. It is apparent that such changes and modifications are within the spirit, scope, and intention of the invention as defined by the appended claims.

The present application is based on Japanese Patent Application No. 2008-266618 filed on October 15, 2008, the contents of which are incorporated herein for reference.

## Claims

1. An audio signal processing device, comprising:
an audio signal acquiring section which acquires an audio signal;
an identifying section which determines whether a format of the audio signal is a first format or a second format, and identifies the format of the audio signal and a switching timing of switching between the first format and the second format of the audio signal;
a first sound processing section which applies a first sound processing adapted to the first format to the audio signal input from the audio acquiring section to output a first processed audio signal;
a second sound processing section which applies a second sound processing adapted to the second format to the audio signal input from the audio acquiring section to output a second processed audio signal;
a switching section which switches among the first processed audio signal and the second processed audio signal to output either one of the first and second processed audio signals on the basis of a switching signal; and
a switching control section which outputs the switching signal to the switching section so that the switching section switches one of the first and second processed audio signals to the other of the first and second processed audio signals which corresponds to the format of the audio signal identified by the identifying section after a standby time is elapsed from the switching timing.

2. The audio signal processing device according to claim 1, wherein a first processing time from an input of the audio signal to an output of the first processed audio signal in the first sound processing section and a second processing time from an input of the audio signal to an output of the second processed audio signal in the second sound processing section are set in accordance with the standby time.

3. The audio signal processing device according to claim 1 or 2, further comprising:
a time information acquiring section which acquires video processing time information from a display device, the video processing time information indicating a processing time required for displaying an acquired video signal on a display screen of the display device by processing the video signal,
wherein the standby time is set in accordance with the processing time indicated by the video processing time information.

4. The audio signal processing device according to any one of claims 1 to 3, wherein the audio signal acquiring section acquires the audio signal from a display device.

5. An audio signal processing method, comprising:
acquires an audio signal;
determining whether a format of the audio signal is a first format or a second format, and identifying the format of the audio signal and a switching timing of switching between the first format and the second format of the audio signal;
applying a first sound processing adapted to the first format to the audio signal acquired by the acquiring process to output a first processed audio signal;
applying a second sound processing adapted to the second format to the audio signal acquired by the acquiring process to output a second processed audio signal;
switching among the first processed audio signal and the second processed audio signal to output either one of the first and second processed audio signals on the basis of a switching signal; and
outputting the switching signal to the switching section so that one of the first and second processed audio signals is switched to the other of the first and second processed audio signals which corresponds to the format of the audio signal identified by the identifying process after a standby time is elapsed from the switching timing.

6. The audio signal processing method according to claim 5, wherein a first processing time from an input of the audio signal to an output of the first processed audio signal in the applying process of the first sound processing and a second processing time from an input of the audio signal to an output of the second processed audio signal in the applying process of the second sound processing are set in accordance with the standby time.

7. The audio signal processing method according to claim 5 or 6, further comprising:
a time information acquiring section which acquires video processing time information from a display device, the video processing time information indicating a processing time required for displaying an acquired video signal on a display screen of the display device by processing the video signal,
wherein the standby time is set in accordance with the processing time indicated by the video processing time information.

8. The audio signal processing method according to any one of claims 5 to 7, wherein the audio signal is acquired from a display device in the acquiring process.
